# EUROPÄISCHE PATENTSCHRIFT

(11) **EP 3 568 605 B1**
(45) Veröffentlichungstag und Bekanntmachung des Hinweises auf die Patenterteilung: **29.07.2020**
(21) Anmeldenummer: 18700531.9
(22) Anmeldetag: 04.01.2018
(51) Int. Cl.: F16D 3/84, F16J 3/04

(54) **FALTENBALG MIT MINDESTENS ZWEI NUTEN IN LOBEN BEREICHEN UND/ODER FÜHRUNGSBEREICHEN**
BELLOWS WITH AT LEAST TWO GROOVES IN LOBED REGIONS AND/OR GUIDE REGIONS
SOUFFLET COMPORTANT AU MOINS DEUX RAINURES DANS LES ZONES DES LOBES ET/OU DANS LES ZONES DE GUIDAGE

(30) Priorität: 11.01.2017 DE 102017100431
(43) Veröffentlichungstag der Anmeldung: 20.11.2019
(73) Patentinhaber: GKN Driveline International GmbH, 53797 Lohmar (DE)
(72) Erfinder: DEISINGER, Markus, 53721 Siegburg (DE)
(74) Vertreter: Geskes, Christoph
(86) Internationale Anmeldenummer: PCT/EP2018/050179
(87) Internationale Veröffentlichungsnummer: WO 2018/130453

(56) Entgegenhaltungen:
- JP-A- 2013 204 685
- JP-B2- 3 572 470
- US-A1- 2005 026 706

## Beschreibung

Die vorliegende Erfindung betrifft einen Faltenbalg mit einem ersten Befestigungsbereich und einem zweiten Befestigungsbereich und einem zwischen diesen angeordneten Faltenbereich, wobei der erste Befestigungsbereich lobe Bereiche und/oder Führungsbereiche und Verbindungsbereiche und einen Bindersitzbereich umfasst, sowie eine Verwendung des erfindungsgemäßen Faltenbalges als auch eine Gelenk-Welle-Verbindung umfassend den erfindungsgemäßen Faltenbalg.

Gattungsgemäße Faltenbalge dienen dazu, Gelenkbauteile insbesondere im Antriebsstrang von Kraftfahrzeugen und Nutzfahrzeugen jeglicher Art abzudichten. Gelenke in Form von Gleichlaufgelenken weisen dabei nach dem Stand der Technik üblicherweise auf ihrem Gelenkaußenteil drei am Umfang angeordnete radiale Vertiefungen auf. Die hierdurch geschaffene Außenkontur wird als trilobeförmig angesprochen und man spricht allgemein von triloben Gleichlaufgelenken. Aufgabe des Faltenbalges ist die Abdichtung des Gelenkbereiches, um einerseits das Eindringen von Schmutz und Feuchtigkeit zu verhindern, andererseits, um ein Austreten einer Fettfüllung des Gelenkes zu vermeiden.

Die Abdichtung erfolgt unter anderem dadurch, dass der Bundbereich eines Faltenbalges der triloben Außenkontur des Gelenkgehäuses durch Vorsehung von Materialverdickungen an entsprechenden Stellen angeformt ist. Die Verdickungen dienen dazu, die Radiusdifferenzen in der triloben Außenkontur des Gelenkgehäuses auszugleichen bei Zurverfügung-Stellung eines Befestigungsbereiches mit konstantem Radius, so dass zur Befestigung des Faltenbalges Befestigungselemente wie Klemmschellen oder Spannbänder, allgemeiner Binder, verwendet werden können.

US 2005/026706 A1, JP 3 572470 B2 und JP 2013 204685 A offenbaren Faltenbalge mit einem ersten und einem zweiten Befestigungsbereich und einem zwischen diesen angeordneten Faltenbereich, wobei der erste Befestigungsbereich lobe Bereiche und Verbindungsbereiche und einen Bindersitzbereich umfasst.

Aus der EP 1 182 372 B1 ist ein gattungsgemäßer Faltenbalg bekannt, der in triloben Bereichen des einem Gelenkgehäuse zugewandten Befestigungsbereiches des Befestigungselementes mindestens einen Schlitz mit einer Länge aufweist, der sich in Umfangsrichtung erstreckt sowie eine Tiefe aufweist, die sich in radialer Richtung im Wesentlichen durch das gesamte Material des zugehörigen triloben Bereiches erstreckt, so dass der trilobe Bereich nicht stabil ist, wobei der mindestens eine Schlitz des triloben Bereiches über den Umfang des Faltenbalges in Abstand von zumindest einen weiteren Schlitz eines benachbarten triloben Bereiches angeordnet ist.

Nachteilig an diesem aus dem Stand der Technik bekannten Faltenbalg ist, dass aufgrund der massigen Ausführung des Befestigungsbereiches es zu Brüchen des Binders bei Befestigung desselben oder aber es aufgrund der ungleichmäßigen Aufbringung der Kräfte zu Dichtigkeitsproblemen im Bereich der Grenzfläche zu einer am Gelenkgehäuse außen angeordneten umlaufenden Gelenknut kommen kann. Werden mehrere parallel verlaufende Schlitze in den triloben Bereichen gemäß der EP 1 182 372 B1 vorgesehen, ist zwischen diesen eine freistehende Rippe angeordnet, die, so das Material zu weich ausgebildet ist, dahin tendiert, bei Anordnung eines Binders und Befestigung desselben sich zu biegen, oder aber, wenn ein zu hartes Material vorgesehen ist, wiederum zu einem möglichen Bruch des Binders bei Befestigung desselben führen kann.

Aufgabe der vorliegenden Erfindung ist es daher, einen Faltenbalg zur Verfügung zu stellen, der der Anordnung an einem Gelenkgehäuse mit einer triloben Außenkontur dient und die aus dem Stand der Technik bekannten Probleme vermeidet.

Diese Aufgabe wird erfindungsgemäß gelöst durch einen Faltenbalg der eingangs genannten Art, wobei der Bindersitzbereich ausgehend von einer Bindersitzbereichoberfläche in den loben Bereichen und/oder in den Führungsbereichen, bevorzugt in allen loben Bereichen und/oder Führungsbereichen, mindestens zwei, im Querschnitt gesehen, parabolisch ausgebildete Nuten, die bevorzugt im Wesentlichen parallel zueinander ausgebildet sind, mit innerhalb der loben Bereiche und/oder der Führungsbereiche unterschiedlicher, anders gesagt variierender, Tiefe umfasst. In den Verbindungsbereichen hingegen kann, und ist vorteilhafterweise, die Tiefe gleich, d. h. sie variiert nicht. Die Erfinder haben erkannt, dass vorteilhafterweise durch die Vorsehung mindestens zweier, bevorzugt im Wesentlichen parallel zueinander verlaufender Nuten in den loben Bereichen und/oder den Führungsbereichen bei Ausbildung der Nuten mit einer im Querschnitt des erfindungsgemäßen Faltenbalges gesehen im Wesentlichen parabolischen Form die Bruchprobleme eingesetzter Binder als auch die Dichtigkeitsprobleme vermieden werden.

In einer beispielhaften Ausführungsform kann der erfindungsgemäße Faltenbalg zum Beispiel drei lobe Bereiche und drei diese verbindende Verbindungsbereiche aufweisen, aber keine Führungsbereiche. In einer alternativen Ausführungsform kann der erfindungsgemäße Faltenbalg zum Beispiel abwechselnd drei lobe Bereiche und drei Führungsbereiche und sechs diese verbindende Verbindungsbereiche aufweisen.

Die loben Bereiche des ersten Befestigungsbereiches des erfindungsgemäßen Faltenbalges weisen auf der Unterseite desselben Materialverstärkungen auf mit einer radialen Kontur, die den am triloben Gelenkgehäuse angeordneten, in Richtung einer Welle verlaufenden Ausnehmungen (radialen Vertiefungen) angepasst sind. Die Führungsbereiche hingegen weisen auf der dem Gelenkgehäuse zugewandten Unterseite des ersten Befestigungsbereiches zwar ebenfalls Materialverstärkungen auf, die jedoch eine lineare Kontur aufweisen. In den Verbindungsbereichen weist der erste Befestigungsbereich eine geringere, bevorzugt dabei gleichbleibende, Materialstärke auf als in den lobalen Bereichen und/oder den Führungsbereichen.

Parabolisch ausgebildete Nuten im Sinne der vorliegenden Erfindung sind solche Nuten, die im Querschnitt des erfindungsgemäßen Faltenbalges durch eine Ebene, die durch den ersten und den zweiten Befestigungsbereich entlang und in einer gedachten Mittelachse des Faltenbalges verläuft, parabelförmig im mathematischen Sinne ausgebildet sind. Dies bedeutet, dass die Form der Nuten des erfindungsgemäßen Faltenbalges als Schnitt eines geraden Kreiskegels in einer Ebene, die parallel zu einer Mantellinie verläuft und nicht durch die Kegelspitze geht, charakterisiert ist. Die Nuten des erfindungsgemäßen Faltenbalges weisen eine Innenwandung auf, die radial ausgebildet ist. Die sich gegenüberliegenden Wandungen der Innenwandung sind im Wesentlichen spiegelsymmetrisch ausgebildet in Bezug auf eine Ebene, die senkrecht zu der vorstehend genannten Ebene durch einen Grund der Nuten verläuft. Der Nutengrund selbst der mindestens zwei Nuten des erfindungsgemäßen Faltenbalges weist keine ebenen, sondern ausschließlich radiale Abschnitte auf. Insbesondere weist der Nutengrund keinerlei Bereiche auf, die im Wesentlichen parallel zu einer der Bindersitzbereichoberfläche entgegengesetzt angeordneten Unterseite des Bindersitzbereiches des ersten Befestigungsbereiches ausgebildet sind. Ausnahme ist eine Tangente, die durch den Nutengrund verläuft.

Die mindestens zwei Nuten sind bevorzugt im Wesentlichen parallel zueinander angeordnet und weisen, so diese nicht als umlaufende Ringnuten ausgebildet sind, weiter bevorzugt eine gleiche Länge in den loben Bereichen und/oder den Führungsbereichen auf. Im Sinne der vorliegenden Erfindung können nicht nur zwei, sondern auch drei, vier oder mehr derartige Nuten vorgesehen sein. Dabei weisen mindestens zwei dieser Nuten einen parabolischen Querschnitt auf, bevorzugt sämtliche der im Bindersitzbereich des ersten Befestigungsbereiches angeordneten Nuten, die ausgehend von der Bindersitzbereichoberfläche dort angeordnet sind, d. h. zur Bindersitzbereichoberfläche des Bindersitzbereiches des ersten Befestigungsbereiches hin offen sind.

In einer besonders bevorzugten Ausführungsform sind die mindestens zwei Nuten des erfindungsgemäßen Faltenbalges als Ringnuten ausgebildet. In den Verbindungsbereichen weisen die Ringnuten eine nur geringe, bevorzugt gleichmäßige, d. h. nicht variierende Tiefe auf. Wesentlich im Sinne der vorliegenden Erfindung ist, dass die Nuten in den loben Bereichen und/oder den Führungsbereichen, bevorzugt in sämtlichen loben Bereichen und/oder Führungsbereichen, angeordnet sind. Alternativ sind die mindestens zwei Nuten als Nutenabschnitte in den lobalen Bereichen und/oder den Führungsbereichen ausgebildet. Die mindestens zwei Nuten sind dann nicht umlaufend, sondern als Abschnitte ausgebildet, die in einer gemeinsamen Ebene verlaufen und aufeinander in Umfangsrichtung des ersten Befestigungsbereiches folgen. Die Verbindungsbereiche weisen bevorzugt keine Nuten auf. Bevorzugt weisen die loben Bereiche, so letztere vorhanden sind, die mindestens zwei parabolischen Nuten bzw. Nutenabschnitte auf. Alternativ können bei einem Faltenbalg, der lobe Bereiche und Führungsbereiche aufweist, nur in den loben Bereichen oder nur in den Führungsbereichen oder sowohl in den loben Bereichen als auch in den Führungsbereichen die mindestens zwei parabolisch ausgebildeten Nuten bzw. Nutenabschnitte vorgesehen sein. Weist der Faltenbalg nur lobe Bereiche, aber keine Führungsbereiche auf, sind die mindestens zwei parabolisch ausgebildeten Nuten bzw. Nutenabschnitte in den loben Bereichen angeordnet, und weiter bevorzugt als Ringnuten ausgebildet, wobei in den Verbindungsbereichen diese dann bevorzugt eine variierende Tiefe aufweisen.

Der Faltenbereich des erfindungsgemäßen Faltenbalges kann mindestens eine Falte aufweisen, die eine Faltenspitze und ein dem ersten Befestigungsbereich und ein dem zweiten Befestigungsbereich zugewandtes Faltental aufweist, wobei zumindest auf das dem zweiten Befestigungsbereich zugewandten Faltental in aller Regel mindestens eine weitere Falte folgt. Der Faltenbereich kann dabei eine Mehrzahl von Falten aufweisen, beispielsweise zwei, drei, vier, fünf, sechs, sieben, acht oder mehr. Die Falten des Faltenbereiches können dabei von dem ersten Bindersitzbereich auf den zweiten Bindersitzbereich hin einen abnehmenden Durchmesser aufweisen, jedoch in Teilen auch einen gleichen Durchmesser. So können beispielsweise zunächst ein bis drei Falten mit einem auf dem zweiten Bindersitzbereich abnehmenden Durchmesser, bezogen auf deren Faltenspitzen, vorgesehen sein, auf welche dann zwei bis vier Falten mit einem identischen Durchmesser, bezogen auf die Faltenspitzen, folgen, wobei dann nachfolgend wiederum ein bis drei Falten mit einem abnehmenden Durchmesser, bezogen auf deren Faltenspitzen, bezogen auf den zweiten Befestigungsbereich hin vorgesehen sein können. Aber auch jede andere Ausbildung des Faltenbereiches ist möglich. Die Faltentäler können dabei eine jedwede Ausgestaltung aufweisen, beispielsweise können sie in Hinblick auf spezielle Anforderungen des erfindungsgemäßen Faltenbalges Unterteilungen in Form von Materialverstärkungen oder Materialschwächungen aufweisen, um das Biegeverhalten des Faltenbalges zu beeinflussen.

Wesentlicher Vorteil der Ausbildung des erfindungsgemäßen Faltenbalges mit zwei parabolischen, bevorzugt im Wesentlichen parallel zueinander verlaufenden, Nuten in den loben Bereichen und/oder den Führungsbereichen mit variierender Tiefe ist, dass auf diese Weise auf den ersten Bindersitzbereich wirkende Kräfte gleichmäßiger übertragen werden, was insbesondere durch die parabolische Ausbildung der Nuten bewirkt ist. Weiterhin kann insbesondere aufgrund der parabolischen Ausbildung der Nuten eine gleichmäßigere Verteilung der Materialdicke innerhalb des ersten Bindersitzbereiches in den loben Bereichen und den Führungsbereichen erzielt werden, die letztendlich ein Brechen von Bindern bei deren Befestigung unterbindet.

Unter unterschiedlicher oder variierender Tiefe in Bezug auf die mindestens zwei Nuten im Sinne der vorliegenden Erfindung ist zu verstehen, dass innerhalb der loben Bereiche und/oder der Führungsbereiche die Tiefe einer Nut von einem Ende eines loben Bereiches und/oder eines Führungsbereiches, gesehen in Umfangsrichtung des ersten Befestigungsbereiches, zur Mitte des loben Bereiches beziehungsweise des Führungsbereiches zunimmt und danach zum gegenüberliegenden Ende des loben Bereiches beziehungsweise des Führungsbereiches, wiederum in Umfangsrichtung gesehen, abnimmt. Die Abnahme beziehungsweise Zunahme erfolgt dabei bevorzugt stetig. Der Nutengrund weist bevorzugt keine Vor- oder Rücksprünge auf, er ist eben ausgebildet. Bevorzugt ist eine Stärke des Materiales des ersten Befestigungsbereiches unterhalb des Nutengrundes der mindestens zwei Nuten in den lobalen Bereichen und/oder den Führungsbereichen im Wesentlichen gleich. Die Stärke des Materiales im ersten Befestigungsbereich unterhalb des Nutengrundes wird bestimmt durch den Abstand zwischen dem Nutengrund beziehungsweise einer durch diesen verlaufenden Tangente und einer Unterseite des ersten Befestigungsbereiches. Die Unterseite ist gegenüberliegend der Bindersitzbereichoberfläche angeordnet. Dabei werden eventuell auf dieser Unterseite angeordnete Dichtlippen oder Positionierungsrippen, wie weiter unten beschrieben, nicht berücksichtigt.

Besonders bevorzugt weist ein zwischen den mindestens zwei Nuten angeordnetes Material des Bindersitzbereiches auf halber Tiefe der Nuten in den loben Bereichen und/oder den Führungsbereichen eine Dicke Dₐ auf, die etwa 85 % bis etwa 115 %, bevorzugt etwa 90 % bis etwa 110 %, noch weiter bevorzugt etwa 93 % bis etwa 106 %, einer Dicke D_{b} entspricht, bestimmt zwischen einer Außenwand oder einer Innenwand des ersten Bindersitzbereiches und der jeweiligen, diesen zugewandten Nutenwand an den mindestens zwei der Außenwand und der Innenwand benachbart angeordneten Nuten auf halber Tiefe. Soweit in der vorliegenden Erfindung der Begriff "etwa" in Bezug auf Werte, Wertbereiche oder werthaltige Begriffe verwendet wird, ist hierunter dasjenige zu verstehen, was der Fachmann in dem gegebenen Zusammenhang als fachmännisch üblich ansehen wird. Insbesondere sind Abweichungen der angegebenen Werte, Wertbereiche oder werthaltigen Begriffe von +/- 10 %, bevorzugt +/- 5 %, weiter bevorzugt +/- 2 %, von dem Begriff "etwa" umfasst.

Eine im Wesentlichen gleichbleibende Materialstärke in den Bereichen auf halber Tiefe führt dazu, dass eine homogenere Kraftverteilung bei Befestigung eines Binders erzielt wird, als auch, dass ein mögliches Abbiegen von zwischen zwei Nuten angeordneten Materiales, wie aus dem Stand der Technik bekannt, vermieden wird. Hierzu trägt auch die parabolische Ausbildung der Nuten selbst bei, so dass das Material zwischen zwei Nuten eine ausgehend von der Bindersitzbereichoberfläche auf die Unterseite des ersten Bindersitzbereiches hin sich verbreitert. Dieses Material kann als rippenförmig ausgebildet angesprochen werden kann.

In einer weiter bevorzugten Ausführungsform des erfindungsgemäßen Faltenbalges sind in den Nuten in den loben Bereichen und/oder den Führungsbereichen Verstärkungsrippen angeordnet. Diese Verstärkungsrippen dienen der Verfestigung des Materiales im ersten Befestigungsbereich aufgrund der insbesondere in den loben Bereichen vorhandenen großen Tiefen der mindestens zwei Nuten. Hierdurch wird insbesondere eine Verbiegung von zwischen mindestens zwei Nuten angeordnetem Material, insbesondere rippenförmig ausgebildeten, vermieden. Die Verstärkungsrippen greifen bevorzugt an den sich gegenüberliegenden Nutenwänden an und sind mit diesen bevorzugt einteilig verbunden. Weiter bevorzugt weisen die Verstärkungsrippen eine Höhe auf, welche maximal der Tiefe der jeweiligen Nuten entspricht. Bevorzugt sind die Verstärkungsrippen vom Nutengrund bis zur Bindersitzbereichoberfläche hin ausgebildet, können jedoch auch etwas unterhalb der Bindersitzbereichoberfläche enden. In einer besonders bevorzugten Ausführungsform ist zumindest eine der Verstärkungsrippen radial ausgerichtet. Radial ausgerichtet heißt in diesem Sinne, dass diese Verstärkungsrippe im Wesentlichen gradlinig verlaufend vom ersten Befestigungsbereich auf eine gedachte Mittelachse des erfindungsgemäßen Faltenbalgs hin ausgebildet ist. In einer weiter bevorzugten Ausführungsform ist vorgesehen, dass zumindest eine der Verstärkungsrippen winklig zu einer radialen Ausrichtung ausgebildet ist. Dies bedeutet, dass eine durch diese weitere winklig ausgebildete Verbindungsrippe, welche geradlinig ausgebildet ist, verlaufende Gerade nicht den Mittelpunkt des Faltenbalges, in dem die gedachte Hauptachse des Balges verläuft, durchstößt. Bevorzugt weist der erfindungsgemäße Faltenbalg mindestens zwei Verstärkungsrippen auf, die radial ausgerichtet sind, wobei bevorzugt eine radial ausgerichtete Verstärkungsrippe in einem loben Bereich und eine weitere radial ausgerichtete Verstärkungsrippe in einem Führungsbereich angeordnet ist, wobei weiter bevorzugt der lobe Bereich und der Führungsbereich mit der radial ausgerichteten Verstärkungsrippe gegenüberliegend angeordnet sind. Die übrigen zwei loben Bereiche und zwei Führungsbereiche weisen hingegen winklig ausgebildete Verstärkungsrippen auf, die weiter bevorzugt auch nicht in Ihrer geradlinigen Erstreckung ineinander fallen, sondern selbst zueinander unterschiedlich ausgebildet sind. Dabei können paarweise identische Winkel für gegenüberliegende lobe Bereiche und Führungsbereiche vorgesehen sein. Die Winkel liegen dabei bevorzugt in einem Bereich zwischen etwa 35° und etwa 80°, weiter bevorzugt in einem Bereich von etwa 40° bis etwa 78°, bezogen auf eine Radiale, die die gedachte, durch den Mittelpunkt des Balges verlaufende Hauptachse auf dem kürzesten Wege mit dem ersten Befestigungsbereich verbindet.

In einer weiter bevorzugten Ausführungsform ist eine Materialstärke S1, S2 des ersten Befestigungsbereiches unterhalb der mindestens zwei Nuten, ausgehend vom Nutengrund derselben, in den loben Bereichen und/oder den Führungsbereichen im Wesentlichen gleich ausgebildet. Dadurch verhält sich vorteilhafterweise das vorhandene Material des ersten Befestigungsbereiches unterhalb der Nuten in den loben Bereichen und in den Führungsbereichen bei angreifenden Kräften durch Schließung eines Binders im Wesentlichen gleich, d. h. dass ein homogenes Verhalten in den loben Bereichen und in den Führungsbereichen, die eine größere Materialstärke als die Verbindungsbereiche aufweisen, erzielbar ist. Die Materialstärke wird dabei ausgehend von dem Nutengrund bis zu der Unterseite des ersten Befestigungsbereiches bestimmt. "Im Wesentlichen" bedeutet dabei, dass die jeweiligen Materialstärken in den loben Bereichen und in den Führungsbereichen um nicht mehr als etwa +/-20 %, bevorzugt nicht mehr als etwa +/- 10 %, noch weiter bevorzugt nicht mehr als etwa +/- 5 %, und noch weiter bevorzugt nicht mehr als etwa +/- 2 %, voneinander abweichen.

In einer weiter bevorzugten Ausführungsform des erfindungsgemäßen Faltenbalges sind an der der Bindersitzbereichoberfläche abgewandten Unterseite des ersten Befestigungsbereiches mindestens zwei Dichtlippen angeordnet. Bevorzugt sind mindestens drei, mindestens vier, mindestens fünf, mindestens sechs oder mehr Dichtlippen angeordnet. Die Dichtlippen sind bevorzugt als umlaufende Ringlippen ausgebildet. Die Dichtlippen verlaufen im Wesentlichen parallel zueinander. Weiter bevorzugt weisen die Dichtlippen, im Querschnitt entlang einer Ebene durch die Hauptachse des Faltenbalges gesehen, die den ersten Befestigungsbereich und den zweiten Befestigungsbereich verbindet, eine im Wesentlichen identische Form auf. Die Querschnittsform ist dabei besonders bevorzugt in etwa dreieckig, kann jedoch auch als halbrund oder mit sonstigen radialen Bereichen ausgebildet sein. Im Falle einer in etwa dreieckigen Querschnittsform ist insbesondere der Spitzenbereich des Dreieckes, der auf eine gedachte Oberfläche einer Gelenknut hin ausgerichtet ist, etwas abgerundet ausgebildet. Nebeneinander angeordnete Dichtlippen weisen im Wesentlichen eine gleiche Höhe auf, ausgehend von der Unterseite des ersten Befestigungsbereiches.

In einer bevorzugten Ausführungsform sind die Dichtlippen im Wesentlichen innerhalb des durch die mindestens zwei Nuten definierten Bereiches in den loben Bereichen und/oder den Führungsbereichen angeordnet. Dieser durch die Nuten definierte Bereich ist definiert durch diejenige Breite der Bindersitzbereichoberfläche, die sich ausgehend von der einer Außenwand des ersten Befestigungsbereiches nächsten Nutenwand bis zu der einer Innenwand des ersten Befestigungsbereiches zugewandten Nutenwand der dort nächsten Nut hin erstreckt. Es kann vorgesehen sein, dass die Dichtlippen genau unterhalb eines Nutengrundes angeordnet sind, oder aber paarweise in Umfangsrichtung versetzt auf beiden Seiten des Nutengrundes. Auch im Bereich von zwischen zwei Nuten gebildeten Materialanhäufungen, die in aller Regel rippenförmig ausgebildet sind, können Dichtlippen vorgesehen sein, bevorzugt genau eine.

In einer weiter bevorzugten Ausführungsform sind in den Verbindungsbereichen des ersten Befestigungsbereiches auf dessen Unterseite zwei Positionierungsrippen angeordnet. Bevorzugt sind zwischen den Positionierungsrippen die mindestens zwei Dichtlippen angeordnet. Bevorzugt weisen die beiden Positionierungsrippen einen Abstand voneinander auf, der im Wesentlichen der Gelenknut an einem Gelenkgehäuse entspricht, auf welchem der erfindungsgemäße Faltenbalg angeordnet wird. Bevorzugt sind die beiden Positionierungsrippen ausschließlich in den Verbindungsbereichen angeordnet. Diese weisen weiter bevorzugt eine Länge auf, die im Wesentlichen einer radialen Erstreckung der Führungsbereiche entspricht oder aber etwas geringer als diese ist. Durch die Vorsehung der beiden Positionierungsrippen, die, in einem Querschnitt betrachtet, der durch die gedachte Hauptachse des erfindungsgemäßen Faltenbalges verläuft und eine Ebene zwischen dem ersten Befestigungsbereich und dem zweiten Befestigungsbereich umfasst, die mindestens beiden Dichtlippen von beiden Seiten umfasst, ermöglicht, dass weitere Positionierungshilfen, welche oftmals im Bereich des Übergangs vom ersten Befestigungsbereich auf den Faltenbereich vorgesehen sind, überflüssig werden. Vorteilhafterweise kann hierdurch erreicht werden, dass eine erste Falte des Faltenbereiches, welche benachbart dem ersten Befestigungsbereich ist, mit einem größeren Durchmesser ausgebildet werden kann, bezogen auf deren Faltenspitze.

Weiter bevorzugt weicht ein Querschnittsprofil der Dichtlippen und der Positionierungsrippen voneinander ab. Das Querschnittsprofil ist bezogen auf eine durch den ersten Befestigungsbereich und den zweiten Befestigungsbereich verlaufende Ebene, die die gedachte Hauptachse des erfindungsgemäßen Faltenbalges schneidet. Im Unterschied zu dem bereits weiter oben beschriebenen Querschnittsprofil der Dichtlippen weisen vorzugsweise die Positionierungsrippen eine zwar im Wesentlichen dreieckige Querschnittsform auf. Bevorzugt ist dabei die Basis des Dreieckes, die sich an der Unterseite des ersten Befestigungsbereiches befindet, breiter ausgebildet als die Basis der Dichtlippen. Weiter bevorzugt ist eine Höhe der Positionierungsrippen etwas geringer als eine Höhe der Dichtlippen. Bevorzugt befinden sich die Positionierungsrippen außerhalb des durch die mindestens zwei Nuten definierten Bereiches und damit nicht unterhalb derselben, wie dies bei den Dichtlippen der Fall ist. Die vorliegende Erfindung betrifft auch einen alternativen Faltenbalg der eingangs genannten Art, bei dem in den Verbindungsbereichen zwei Positionierungsrippen angeordnet sind, zwischen denen mindestens zwei Dichtlippen, die umlaufend auf einer Unterseite des ersten Befestigungsbereiches angeordnet sind, angeordnet sind. Die zwei Positionierungsrippen weisen dabei vorteilhafterweise diejenigen näheren Ausgestaltungen auf wie vorstehend beschrieben. In weiteren bevorzugten Ausführungen eines solchen alternativen Faltenbalges weist dieser diejenigen sonstigen Ausgestaltungen auf, die vorstehend beschrieben sind, also insbesondere zwei parabolisch ausgebildete Nuten zumindest in den loben Bereichen und/oder den Führungsbereichen und die mit diesen zusammenhängenden näheren Ausgestaltungen derselben, als auch diejenigen des ersten Bindersitzbereiches. Auch weist dieser alternative Faltenbalg bevorzugt die mindestens zwei Dichtlippen in Ausgestaltungen auf wie vorstehend beschrieben.

Die vorliegende Erfindung betrifft weiterhin die Verwendung eines erfindungsgemäßen Faltenbalges wie vorstehend definiert zur Abdichtung einer Gelenk-Welle-Verbindung, bevorzugt eines Gleichlaufgelenkes. Des Weiteren betrifft die vorliegende Erfindung eine Gelenk-Welle-Verbindung mit einem erfindungsgemäßen Faltenbalg wie weiter oben beschrieben. Bevorzugt ist die Gelenk-Welle-Verbindung ein Gleichlaufgelenk. Der erfindungsgemäße Faltenbalg kann auf diesem vormontiert sein mit einem noch nicht festgezogenen Binder, der im ersten Befestigungsbereich jedoch bereits angeordnet ist. Bevorzugt ist bei der erfindungsgemäßen Gelenk-Welle-Verbindung die Innenkontur des erfindungsgemäßen Faltenbalges der Außenkontur des Gelenkgehäuses angepasst. Der erste Befestigungsbereich des erfindungsgemäßen Faltenbalges wirkt dabei insbesondere mit einer nahe der Gelenkgehäusekante angeordneten umlaufenden Gelenknut auf der Außenseite des Gelenkgehäuses zusammen.

Diese und weitere Vorteile der vorliegenden Erfindung werden anhand der nachfolgenden Figuren näher erläutert. Es zeigen:
- Fig. 1:: eine perspektivische Ansicht eines erfindungsgemäßen Faltenbalges in einer ersten Ausführungsform;
- Fig. 2:: eine gedrehte perspektivische Ansicht des Faltenbalges gemäß Fig. 1;
- Fig.3:: eine Schnittansicht durch einen Nutengrund einer Nut des Faltenbalges der ersten Ausführungsform;
- Fig. 4:: eine perspektivische Ansicht eines erfindungsgemäßen Faltenbalges in einer zweiten Ausführungsform;
- Fig. 5:: einen Querschnitt durch einen Nutengrund einer Nut eines Faltenbalges gemäß Fig. 4 mit einem eingezeichneten Schnitt I-I durch zwei Verbindungsbereiche;
- Fig. 6:: eine Schnittansicht gemäß dem Schnitt I-I der Fig. 5, jedoch zeigend den vollständigen ersten Bindersitzbereich 12;
- Fig. 7:: eine Schnittansicht durch einen Nutengrund einer Nut des Faltenbalges gemäß Fig. 4 mit einem Schnitt II-II durch einen Führungsbereich und einen loben Bereich;
- Fig. 8:: eine Schnittansicht gemäß dem Schnitt II-II der Fig. 7, jedoch zeigend den vollständigen ersten Bindersitzbereich 12;
- Fig. 9a:: einen Querschnitt durch einen loben Bereich eines Faltenbalges gemäß Fig.7 und Fig. 8;
- Fig. 9b:: den Querschnitt durch den loben Bereich gemäß Fig. 7 und Fig. 8 mit montiertem Binder;
- Fig. 10:: einen Querschnitt durch einen Führungsbereich des Faltenbalges gemäß Fig. 7 und Fig. 8;
- Fig. 11:: einen Querschnitt durch einen Verbindungsbereich des Faltenbalges gemäß Fig.5 und Fig. 6 als auch durch einen Teil des Faltenbereiches;
- Fig. 12:: einen Querschnitt durch einen Verbindungsbereich des Faltenbalges gemäß Fig. 5 und Fig. 6;

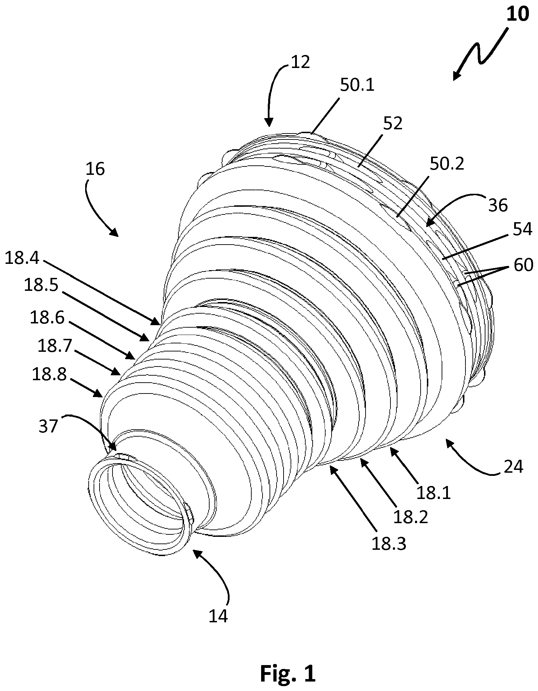

- Fig. 1 3a:: einen Querschnitt durch einen Führungsbereich einer dritten Ausführungsform des erfindungsgemäßen Faltenbalges; und

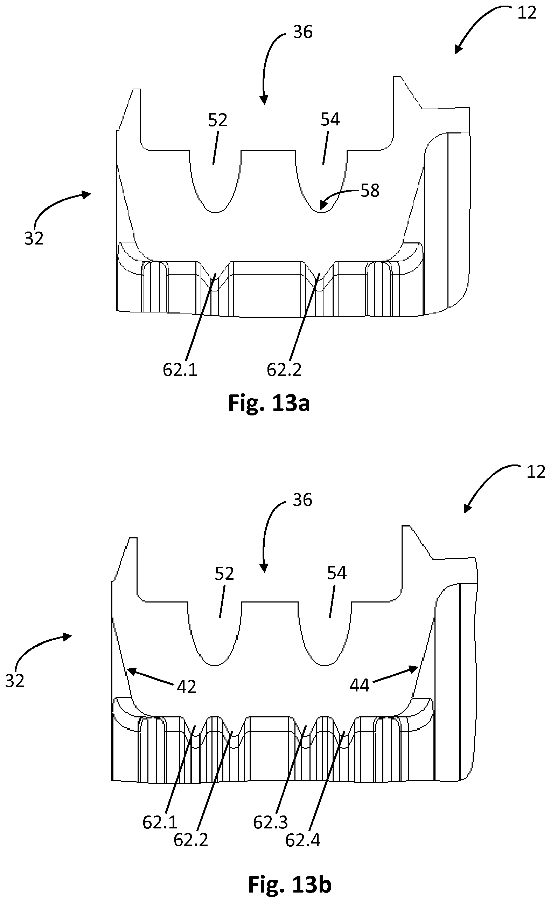

- Fig. 13b:: einen Querschnitt durch einen Führungsbereich einer vierten Ausführungsform des erfindungsgemäßen Faltenbalges.

Zunächst sei vorausgeschickt, dass die in den Figuren dargestellten Ausführungsformen nicht beschränkend auszulegen sind. Vielmehr können die dort beschriebenen Merkmale untereinander und mit den zuvor beschriebenen Merkmalen zur weiteren Ausgestaltung kombiniert werden. So können beispielsweise auch mehr oder weniger als insgesamt fünf Dichtlippen 62.1 bis 62.5 auf einer Unterseite 40 eines ersten Befestigungsbereiches 12 angeordnet sein. Auch können mehr als zwei parabolisch ausgebildete Nuten 52 und 54 vorgesehen sein, beispielsweise drei oder vier. Auch kann die Parabolform der Nuten 52 und 54 von derjenigen in den Figuren gezeigten abweichen. Auch kann vorgesehen sein, dass keine umlaufenden Nuten 52 und 54 vorgesehen sind, sondern dass in den Verbindungsbereichen 34 keine Nuten 52 und 54 vorliegen. Dann liegen Nutenabschnitte der Nuten 52 und 54 nur in den loben Bereichen 30 und den Führungsbereichen 32 vor. Der Faltenbalg 10 kann auch z. B. nur drei lobe Bereiche 30 und drei Verbindungsbereiche 34, aber keine Führungsbereiche 32, aufweisen. Auch kann der Faltenbalg 10 in seinem Faltenbereich 16 mehr oder weniger oder aber anders, insbesondere solche mit einem abnehmenden Durchmesser auf den zweiten Befestigungsbereich 14 zu, ausgebildete Falten 18 aufweisen. Des Weiteren müssen Positionierungsrippen 64.1 und 64.2 nicht vorgesehen sein, wie auch durch die dritte und vierte Ausführungsform verdeutlicht. Schließlich sei darauf hingewiesen, dass die in der Figurenbeschreibung und den Ansprüchen angegebenen Bezugszeichen den Schutz der vorliegenden Erfindung nicht beschränken, sondern lediglich auf die in den Figuren gezeigten Ausführungsformen verweisen. Eine Materialanhäufung 26 kann, muss aber nicht vorhanden sein.

Fig. 1 zeigt einen insgesamt mit dem Bezugszeichen 10 bezeichneten Faltenbalg in einer ersten Ausführungsform mit einem ersten Befestigungsbereich 12, einem zweiten Befestigungsbereich 14 und einem zwischen diesen angeordneten Faltenbereich 16 mit acht Falten 18.1 bis 18.8. Zwischen dem ersten Befestigungsbereich 12 und dem Faltenbereich 16 ist ein Übergangsbereich 24 vorgesehen. Im ersten Befestigungsbereich 12 mit einem ersten Bindersitzbereich 36 sind zwei umlaufende Nuten 52 und 54 angeordnet, die parallel zueinander verlaufen. Der zweite Befestigungsbereich 14 weist einen zweiten Bindersitzbereich 37 auf. Verstärkungsrippen 60 sind in hier nicht näher bezeichneten Führungsbereichen und loben Bereichen des Faltenbalges 10 in den Nuten 52 und 54 angeordnet.

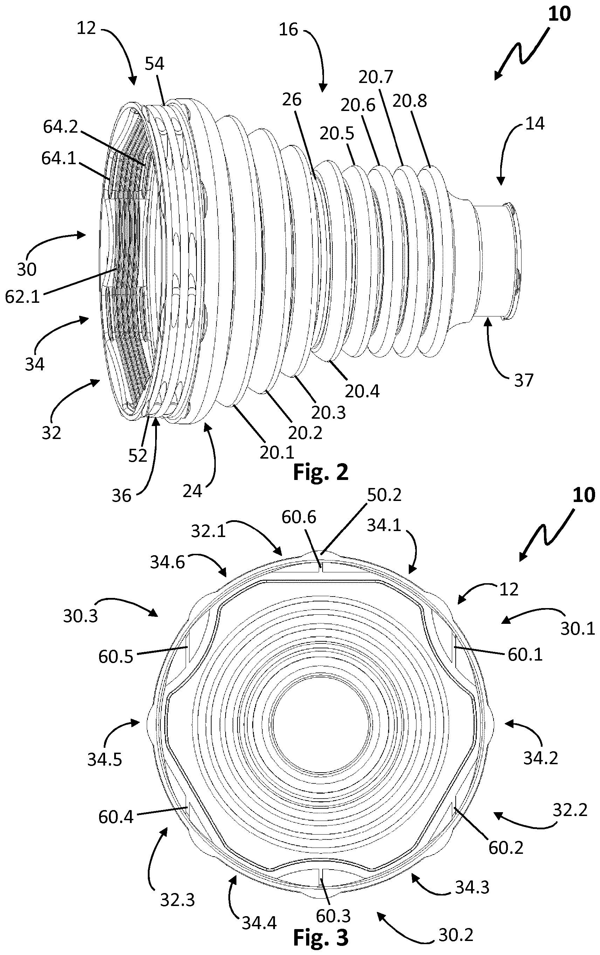

Fig. 2 zeigt den Faltenbalg 10 der ersten Ausführungsform gemäß Fig. 1 in einer gedrehten Ansicht, in welchem die Ausgestaltung des ersten Befestigungsbereiches 12 näher erkennbar ist. Der erste Befestigungsbereich 12 weist lobe Bereiche 30, Führungsbereiche 32 und Verbindungsbereiche 34, angeordnet zwischen dem loben Bereich 30 und dem Führungsbereich 32, auf. Auf einer Unterseite 40 des ersten Befestigungsbereiches 12 sind insgesamt fünf parallel zueinander ausgerichtete umlaufende Dichtlippen, von denen nur die Dichtlippe 62.1 bezeichnet ist, vorgesehen. In dem Verbindungsbereich 34 sind zudem zwei Positionierungsrippen 64.1 und 64.2 angeordnet, zwischen denen die Dichtlippen 62.1 bis 62.5 angeordnet sind. Die Positionierungsrippen 64.1 und 64.2 sind im Wesentlichen parallel zu den Dichtlippen 62.1 bis 62.5 angeordnet. Gegenüberliegend der Unterseite 40 des ersten Befestigungsbereiches 12 ist der erste Bindersitzbereich 36 angeordnet mit seiner Bindersitzbereichoberfläche 38, zu welcher hin die Nuten 52 und 54 hin offen sind.

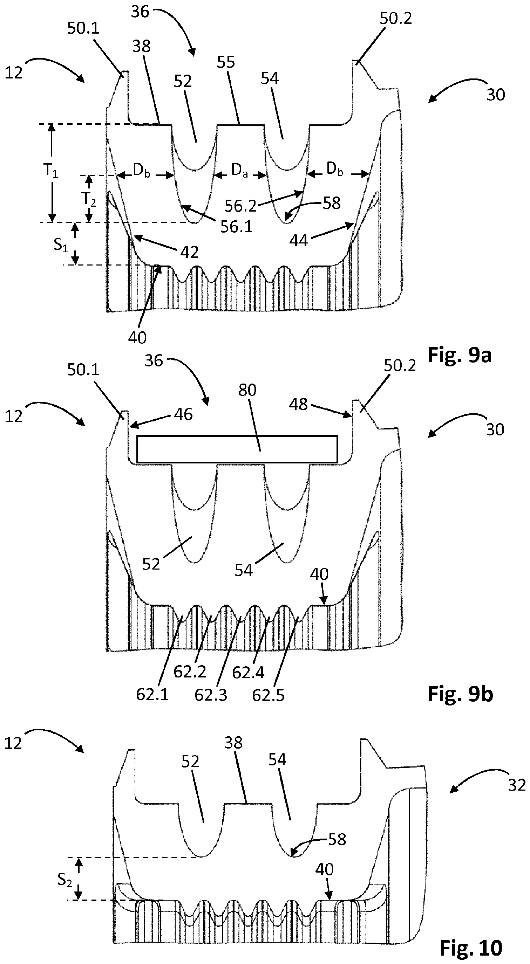

Fig. 3 zeigt die erste Ausführungsform des erfindungsgemäßen Faltenbalges 10 gemäß Fig. 1 in Form eines Schnittes durch einen Nutengrund einer der beiden Nuten 52 und 54 gemäß Fig. 1, so dass die Anordnung von Verstärkungsrippen 60.1 bis 60.6 in der Nute 52 bzw. 54 ersichtlich ist. Fig. 3 zeigt im Einzelnen die insgesamt drei loben Bereiche 30.1, 30.2 und 30.3 als auch die drei Führungsbereiche 32.1, 32.2 und 32.3, wobei diese jeweils verbunden werden durch Verbindungsbereiche 34.1 bis 34.6. Im Bereich der Verbindungsbereiche 34.1 bis 34.6 ist die Materialstärke des ersten Bindersitzbereiches 12 etwas geringer, wohingegen diese in den loben Bereichen 30.1 bis 30.3 und den Führungsbereichen 32.1 bis 32.3 im Wesentlichen identisch ist. Gut erkennbar ist in der Fig. 3 auch die Ausbildung von ohrförmigen Vorsprüngen 50.2, die auch Fig. 1 zu entnehmen sind. Gegenüberliegend diesen ohrförmigen Vorsprüngen 50.2 können im Randbereich des ersten Befestigungsbereiches 12 ebenfalls ohrförmige Vorsprünge 50.1 angeordnet sein, jedoch auch versetzt zu diesen (siehe Fig. 1). Die ohrförmigen Vorsprünge 50.1 und 50.2 dienen einer vereinfachten Positionierung eines hier nicht gezeigten Binders 80 (siehe Fig. 9b) im ersten Befestigungsbereich 12. Die Verstärkungsrippen 60.1, 60.2, 60.4 und 60.5 sind winklig zu einer radialen Orientierung des Faltenbalges 10 ausgebildet. Im Unterschied dazu sind die im loben Bereich 30.2 und im Führungsbereich 32.1 angeordneten Verstärkungsrippen 60.3 bzw. 60.6 radial ausgerichtet.

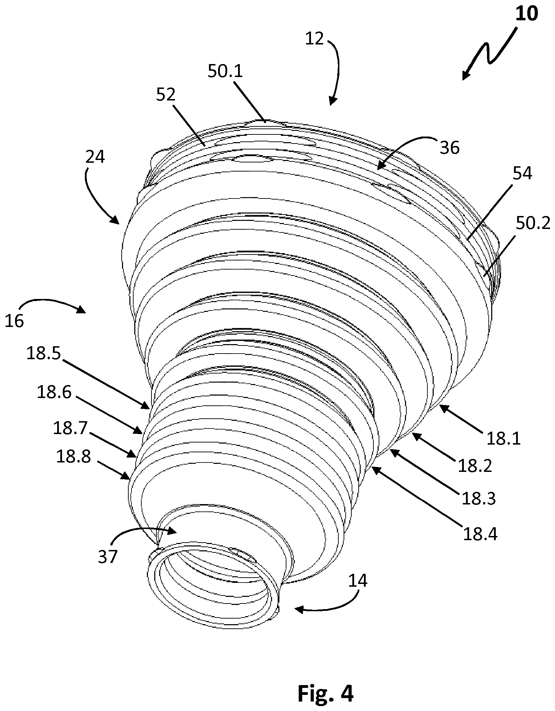

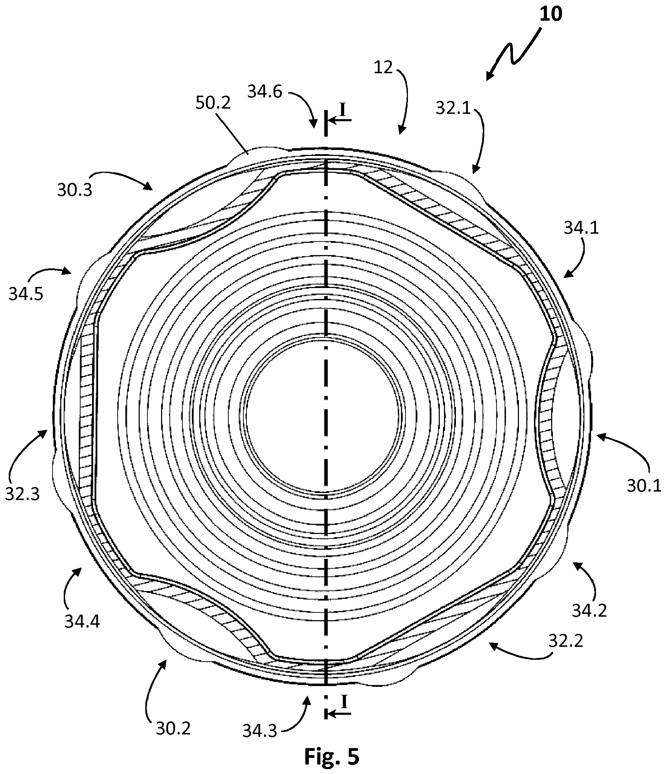

Fig. 4 zeigt einen Faltenbalg 10 in einer zweiten Ausführungsform, welcher sich von derjenigen der ersten Ausführungsform gemäß den Fig. 1 bis Fig. 3 lediglich dadurch unterscheidet, dass in den Nuten 52 und 54 in den loben Bereichen und den Führungsbereichen keine Verstärkungsrippen vorgesehen sind. Dies wird besonders deutlich durch die Schnittansicht gemäß Fig. 5 durch eine der beiden Nuten 52 bzw. 54 der Fig. 4. Im Unterschied zur Fig. 3 sind keine Verstärkungsrippen 60 (siehe Fig. 3) ersichtlich. Ansonsten entspricht die Ausgestaltung dieses Faltenbalges 10 gemäß der zweiten Ausführungsform in dieser Schnittansicht gemäß Fig. 5 derjenigen in Fig. 3.

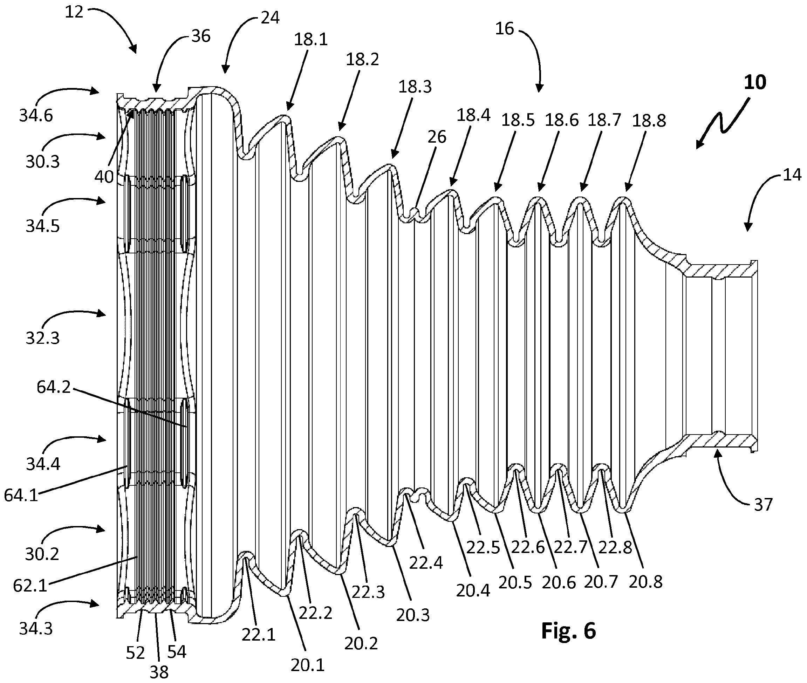

Fig. 6 zeigt eine Schnittansicht durch den Faltenbalg 10 der zweiten Ausführungsform entlang eines Schnittes I-I, jedoch mit vollständig wiedergegebenen ersten Befestigungsbereich 12. Gut ist die Ausgestaltung des Faltenbalges 16 mit den acht Falten 18.1 bis 18.8 ersichtlich, wobei die Falten 18.5 bis 18.8 einen wesentlichen gleichen Durchmesser aufweisen, hingegen die Falten 18.1 bis 18.4 einen auf den zweiten Befestigungsbereich 14 mit seinem Bindersetzbereich 37 hin abnehmenden Durchmesser. Im Faltenteil 22.4 zwischen den Falten 18.3 und 18.4 ist eine Materialanhäufung 26, die auch in der ersten Ausführungsform vorliegt (siehe Fig. 2), zu entnehmen, welche das Biegeverhalten des Faltenbalges 10 beeinflusst. Der Übergangsbereich 24 geht stetig abnehmend ohne Ausbildung einer Erhebung oder Faltenspitze über in ein Faltental 22.1. Der Schnitt I-I verläuft durch Verbindungsbereiche 34.3 und 34.6. An dem Verbindungsbereich 34.3 schließt ein loben Bereich 32.2 an, der wiederum mit dem Führungsbereich 32.3 verbunden ist über einen Verbindungsbereich 34.4. Der Führungsbereich 34.3 wiederum ist verbunden mit einem loben Bereich 30.3 über den Führungsbereich 34.5. Sämtliche Führungsbereiche weisen die Positionierungsrippen 64.1 und 64.2 auf, wie weiter vorstehend im Zusammenhang mit Fig. 2 beschrieben. Ebenfalls wie bei der ersten Ausführungsform sind fünf Dichtlippen 62 vorgesehen, welche an einer Unterseite 40 des ersten Befestigungsbereiches 40 umlaufend ringförmig und parallel zu einander ausgebildet angeordnet sind. Dabei ist nur die erste Dichtlippe 62.1 bezeichnet.

Die beiden zu einer Bindersitzbereichoberfläche 38 hin offenen Nuten 52 und 54 sind bei dieser zweiten Ausführungsform wie auch bei der ersten Ausführungsform als Ringnuten ausgebildet, und weisen in den Verbindungsbereichen 34.3 und 34.6 nur eine geringe, gleichbleibende Tiefe auf.

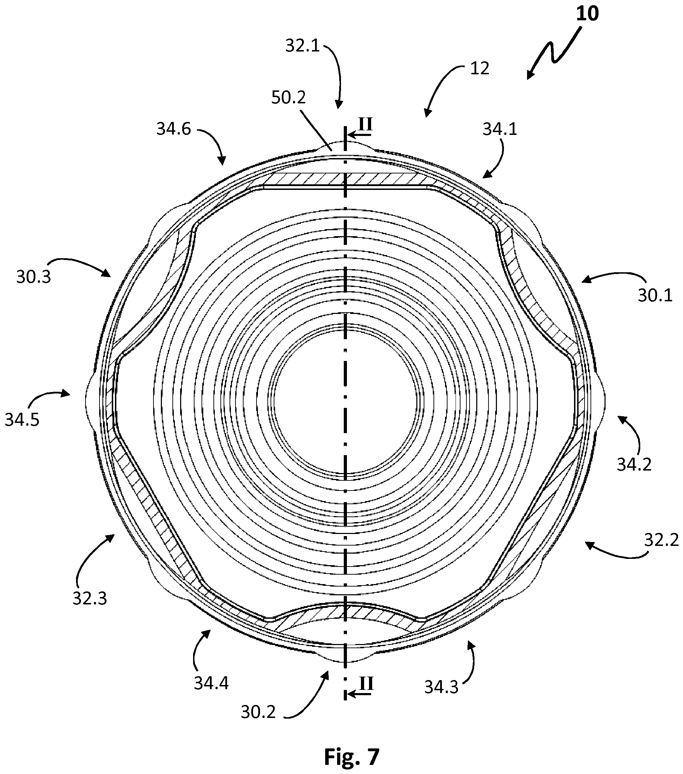

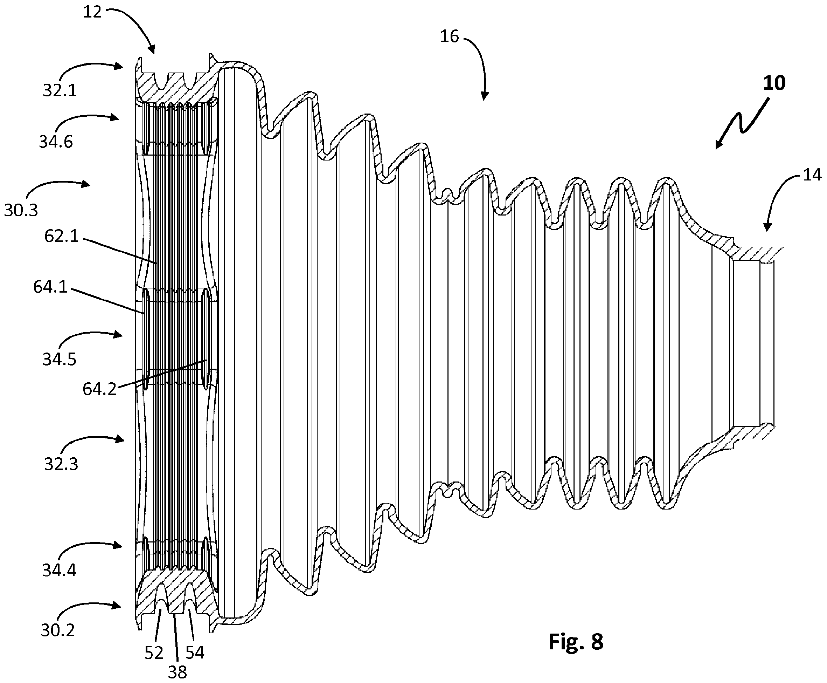

Fig. 7 zeigt eine Schnittdarstellung gemäß Fig. 5, jedoch derart gedreht, dass der Führungsbereich 32.1 nach oben zu liegen kommt und der loben Bereich 30.2 nach unten. Ein Schnitt II-II ist eingezeichnet. Dieser Schnitt II-II ist Fig. 8 zu entnehmen, wobei jedoch wiederum der vollständige erste Befestigungsbereich 12 gezeigt ist. Der Führungsbereich 32.1 ist mit dem lobe Bereich 30.3 über den Verbindungsbereich 34.6 verbunden. Der Verbindungsbereich 32.3 ist mit dem loben Bereich 30.3 über den Verbindungsbereich 34.5 verbunden. Der lobe Bereich 30.2 ist über den Verbindungsbereich 34.4 mit dem Führungsbereich 32.3 verbunden. Die Nuten 52 und 54 weisen eine parabolische Ausbildung mit variierender Tiefe auf, wobei im Führungsbereich 32.1 eine geringere maximale Tiefe zwischen der Bindersitzbereichoberfläche 38 und einem Nutengrund vorliegt als im loben Bereich 30.2. Die Ausgestaltung des loben Bereiches 30.2 und des Führungsbereiches 32.1 ist im Folgenden in den Fig. 9 a bis 10 näher erläutert.

Die Fig. 9a und 9b zeigen eine Querschnittsansicht durch einen loben Bereich 30 des Faltenbalges gemäß der zweiten Ausführungsform gemäß Fig. 7 und Fig.8. Gezeigt ist ein Querschnitt durch eine Ebene, die durch eine gedachte Hauptachse des Faltenbalges 10 verläuft und dabei den ersten Befestigungsbereich 12 und den hier nicht gezeigten zweiten Befestigungsbereich 14 (siehe Fig. 4, 6 oder Fig. 8) im Bereich eines loben Bereiches 30 schneidet. Der erste Befestigungsbereich 12 umfasst dabei neben der Bindersitzbereichoberfläche 38 im Bindersitzbereich 36 und der dieser gegenüberliegend angeordneten Unterseite 40 eine Außenwand 42 und eine Innenwand 44, wobei die Innenwand 44 dem Faltenbereich 16 (hier nicht gezeigt) zugewandt ist, die Außenwand 42 hingegen einem hier nicht gezeigten Gelenkgehäuse. Die beiden Nuten 52 und 54 sind im Querschnitt gesehen parabolisch ausgebildet und weisen eine maximale Tiefe T1 auf. Ausgehend von dieser ist eine halbe Tiefe T2 zwischen einer Tangente durch den Nutengrund 58 parallel zu der Bindersitzbereichoberfläche 38 angegeben. Auf halber Tiefe T2 ist eine Dicke Dₐ eines rippenförmigen Materiales 55 zwischen den beiden Nuten 52 und 54 bestimmbar, wobei diese Dicke Dₐ im Wesentlichen gleich einer Dicke D_{b}, bestimmt zwischen der Außenwand 42 und einer dieser nächsten Nutenwand 56.1 als auch zwischen der Innenwand 44 und einer dieser nächsten Nutenwand 56.2, ist. Zwischen dem Nutengrund 58 beziehungsweise einer durch diesen verlaufenden Tangente parallel zur Unterseite 40 des ersten Befestigungsbereiches 12 und eben dieser Unterseite 40 ist eine Stärke S1 ermittelbar. Wie weiter unten erläutert wird, ist diese Stärke S1 im Wesentlichen identisch zu einer Stärke S2, die im Führungsbereich 32 ermittelbar ist (siehe Fig. 10).

Auf der Unterseite 40 sind insgesamt fünf Dichtlippen 62.1 bis 62.5 gut erkennbar (Fig. 9b) mit einem im Wesentlichen dreieckigen Querschnitt mit etwas abgerundeter, von der Unterseite 40 wegweisender Spitze. Sämtliche dieser Dichtlippen 62.1 bis 62.5 liegen innerhalb des durch die Nuten 52 und 54 auf der Bindersitzbereichoberfläche 38 aufgespannten Bereiches. Der Bindersitzbereich 36 selbst wird durch eine äußere Begrenzungswand 46 und eine innere Begrenzungswand 48 begrenzt. Fig. 9b zeigt die Anordnung eines Binders 80 im ersten Befestigungsbereich 12 Die durch den Binder 80 wirkende Kräfte werden gleichmäßig in das Material des loben Bereiches 30 des ersten Befestigungsbereiches 12 übertragen werden, wodurch dann letztendlich über Dichtlippen 62.1 bis 62.5 eine gute Dichtung in der Grenzfläche zu der hier nicht gezeigten, am Gelenkgehäuse angeordneten umlaufenden Gelenknut erzielt werden kann.

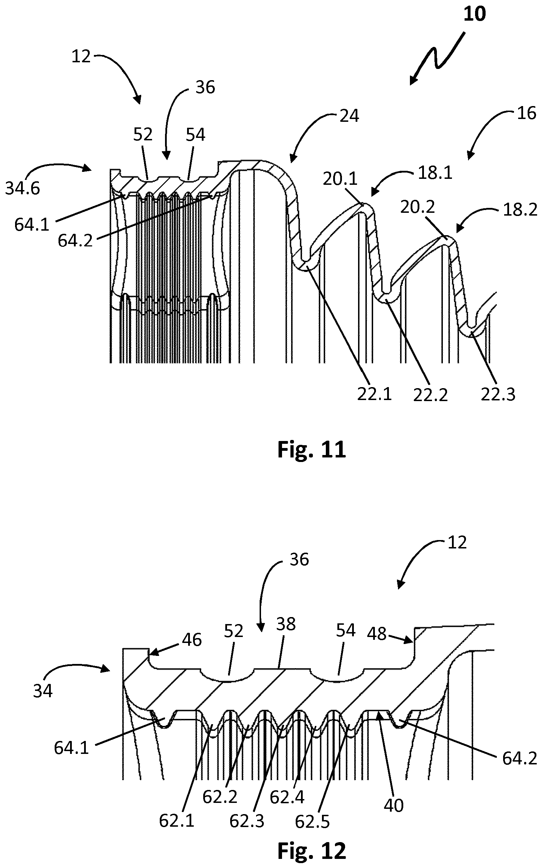

Fig. 10 zeigt einen den Fig. 9a und 9b entsprechenden Querschnitt durch den Führungsbereich 32 entsprechend der Fig. 7 und Fig. 8 mit der Stärke S2, die der Stärke S1 des loben Bereiches gemäß den Fig. 9a und 9b im Wesentlichen entspricht. Im Übrigen ist zu sehen, dass die Nuten 52 und 54 im diesen Bereich weniger tief ausgebildet sind als im loben Bereich 30 gemäß den Fig. 9a und 9b, wobei jedoch eine Öffnung der Nuten 52 und 54 zur Bindersitzbereichoberfläche 38 hin identisch ist, mithin die Öffnungsbreite der Nuten 52 und 54 in dem loben Bereich 30 und in dem Führungsbereich 32 als auch in dem Verbindungsbereich 34 (siehe Fig. 11 und Fig. 12) identisch ist.

Fig. 11 zeigt einen den Fig. 9a und 9b entsprechenden Querschnitt durch den Verbindungsbereich 34.6 gemäß Fig.5 und Fig. 6. zusammen mit dem angrenzenden Teil des Faltenbereiches 16 mit den Falten 18.1 und 18.2. Die Falte 18.1 weist zwischen dem Übergangsbereich 24 und einer Faltenspitze 20.1 ein erstes Faltental 22.1 und zwischen der zweiten Faltenspitze 20.2 und der Faltenspitze 20.1 ein zweites Faltental 22.2 auf, wobei das Faltental 22.2 der zweiten Falte 18.2 zuzurechnen ist. Die zweite Falte 18.2 wiederum ist definiert durch den Bereich zwischen dem zweiten Faltental 22.2 und einem dritten Faltental 22.3 definierten Bereich mit der zweiten Faltenspitze 20.2. Der Übergangsbereich 24 bildet keine Faltenspitze aus, sondern fällt auf den ersten Faltenteil 22.1 hin ab.

In Fig. 11 sind die Positionierungsrippen 64.1 und 64.2 zu erkennen. In der Darstellung gemäß Fig. 12 ist ersichtlich, dass ein Verbindungsbereich 34 auf der Unterseite 40 mit Positionierungsrippen 64.1 und 64.2 eine etwas geringere Höhe als die Dichtlippen 62.1 bis 62.5 und eine breitere Basis als diese aufweist. Die beiden Nuten 52 und 54 weisen nur eine sehr geringe Tiefe auf. In einer alternativen Ausführungsform kann auch vorgesehen sein, dass in dem Verbindungsbereich 34 keine Nuten 52 und 54 vorgesehen sind, so dass dort die Bindersitzbereichoberfläche 38 des Bindersitzbereiches 36 zwischen der äußeren Begrenzungswand 46 und der inneren Begrenzungswand 48 im Wesentlichen eben ausgebildet ist.

Fig. 13a zeigt eine dritte Ausführungsform des erfindungsgemäßen Faltenbalges mit einem Führungsbereich 32 und zwei parallel zueinander angeordneten parabolisch im Querschnitt ausgebildeten Nuten 52 und 54, wobei dem jeweiligen Nutengrund 58 derselben jeweils eine Dichtlippe 62.1 und 62.2 zugeordnet ist. In einer vierten Ausführungsform des erfindungsgemäßen Faltenbalges sind gemäß Fig. 13b im ersten Befestigungsbereich 12 ebenfalls zwei Nuten 52 und 54 mit parabolischer Ausbildung in einem Führungsbereich 32 ausgebildet, wobei paarweise einer jeder dieser Nuten 52 und 54 ein Paar Dichtlippen 62.1, 62.2 und 62.3, 62.4 zugeordnet sind.

Mit der vorliegenden Erfindung wird ein Faltenbalg vorgeschlagen, der einerseits sehr gut dichtend in einer Gelenknut eines triloben Gelenkgehäuses angeordnet werden kann und gleichzeitig eine gute Übertragung der durch einen Binder auf diesen ausgeübten Kräfte in ein Gelenkgehäuse vermittelt. Zudem wird ein Bruch eines Binders bei Montage desselben und Befestigung im ersten Befestigungsbereich des erfindungsgemäßen Faltenbalges auf einem Gelenkgehäuse vermieden.

## Patentansprüche

1. Faltenbalg (10) mit einem ersten und einem zweiten Befestigungsbereich (12, 14) und einem zwischen diesen angeordneten Faltenbereich (16), wobei der erste Befestigungsbereich (12) lobe Bereiche (30.1, 30.2, 30.3) und/oder Führungsbereiche (32.1, 32.2, 32.3) und Verbindungsbereiche (34.1, 34.2. 34.3, 34.4. 34.5, 34.6) und einen Bindersitzbereich (36) umfasst, **dadurch gekennzeichnet, dass** der Bindersitzbereich (36) ausgehend von einer Bindersitzbereichoberfläche (38) in den loben Bereichen (30.1, 30.2, 30.3) und/oder in den Führungsbereichen (32.1, 32.2, 32.3) mindestens zwei, im Querschnitt gesehen, parabolisch ausgebildete Nuten (52, 54) mit innerhalb der loben Bereiche (30.1, 30.2, 30.3) und/oder der Führungsbereiche (32.1, 32.2, 32.3) unterschiedlicher Tiefe (T1) umfasst.

2. Faltenbalg gemäß Anspruch 1, **dadurch gekennzeichnet, dass** ein zwischen den mindestens zwei Nuten (52, 54) angeordnetes Material (55) des Bindersitzbereiches (36) auf halber Tiefe (T2) der Nuten (52, 54) in den loben Bereichen (30.1, 30.2, 30.3) und/oder in den Führungsbereichen (32.1, 32.2, 32.3) eine Dicke Dₐ aufweist, die etwa 85 % bis etwa 115 % einer Dicke D_{b} entspricht, bestimmt zwischen einer Außenwand (42) oder einer Innenwand (44) des ersten Befestigungsbereiches (12) und der jeweiligen, diesen zugewandten Nutenwand (56.1, 56.2) der Nut (52, 54) auf halber Tiefe (T2).

3. Faltenbalg gemäß einem oder mehreren der vorhergehenden Ansprüche, **dadurch gekennzeichnet, dass** innerhalb der Nuten (52, 54) in den loben Bereichen (30.1, 30.2, 30.3) und/oder in den Führungsbereichen (32.1, 32.2, 32.3) Verstärkungsrippen (60.1, 60.2, 60.3, 60.4, 60.5, 60.6) angeordnet sind.

4. Faltenbalg gemäß Anspruch 3, **dadurch gekennzeichnet, dass** zumindest eine der Verstärkungsrippen (60.1, 60.2, 60.3) radial ausgerichtet ist.

5. Faltenbalg gemäß Anspruch 3, **dadurch gekennzeichnet, dass** zumindest eine der Verstärkungsrippen (60) winklig zu einer radialen Orientierung des Faltenbalges (10) ausgebildet ist.

6. Faltenbalg gemäß einem oder mehreren der vorhergehenden Ansprüche, **dadurch gekennzeichnet, dass** die Nuten (52, 54) als Ringnuten ausgebildet sind.

7. Faltenbalg gemäß einem oder mehreren der vorhergehenden Ansprüche, **dadurch gekennzeichnet, dass** eine Materialstärke (S1, S2) des ersten Befestigungsbereiches (12) unterhalb der Nuten (52, 54) in den loben Bereichen (30.1, 30.2, 30.3) und/oder den Führungsbereichen (32.1, 32.2, 32.3) im Wesentlichen gleich ist.

8. Faltenbalg gemäß einem oder mehreren der vorhergehenden Ansprüche, **dadurch gekennzeichnet, dass** an einer der Bindersitzbereichoberfläche (38) abgewandten Unterseite (40) des ersten Befestigungsbereiches (12) mindestens zwei Dichtlippen (62.1, 62.2, 62.3, 62.4, 62.5) angeordnet sind.

9. Faltenbalg gemäß Anspruch 8, **dadurch gekennzeichnet, dass** die Dichtlippen (62.1, 62.2, 62.3, 62.4, 62.5) im Wesentlichen unterhalb der Nuten (52, 54) zumindest in den loben Bereichen (30.1, 30.2, 30.3) und/oder den Führungsbereichen (32.1, 32.2, 32.3) angeordnet sind.

10. Faltenbalg gemäß einem oder mehreren der vorhergehenden Ansprüche, **dadurch gekennzeichnet, dass** in den Verbindungsbereichen (34.1, 34.2. 34.3, 34.4. 34.5, 34.6) zwei Positionierungsrippen (64.1, 64.2) angeordnet sind.

11. Faltenbalg gemäß Anspruch 10, **dadurch gekennzeichnet, dass** zwischen den beiden Positionierungsrippen (64.1, 64.2) die Dichtlippen (62.1, 62.2, 62.3, 62.4, 62.5) angeordnet sind.

12. Faltenbalg gemäß einem oder mehreren der Ansprüche 8 bis 11, **dadurch gekennzeichnet, dass** ein Querschnittsprofil der Dichtlippen (62.1, 62.2. 62.3, 62.4, 62.5) und der Positionierungsrippen (64.1, 64.2) voneinander abweicht.

13. Verwendung eines Faltenbalges (10) gemäß einem oder mehreren der Ansprüche 1 bis 12 zur Abdichtung einer Gelenk-Welle-Verbindung.

14. Gelenk-Welle-Verbindung mit einem Faltenbalg (10) gemäß einem oder mehreren der Ansprüche 1 bis 12.

## Claims

1. Boot (10) that has a first and second fastening region (12, 14) and a convoluted region (16) therebetween, wherein the first fastening region (12) comprises lobe regions (30.1, 20.2, 30.3) and/or guide regions (32.1, 32.2, 32.3) and connecting regions (34.1, 34.2, 34.3, 34.4, 34.5, 34.6), and a binder seat region (36), **characterized in that** said binder seat region (36) comprises at least two grooves (52, 54) in the lobe regions (30.1, 30.2, 30.3) and/or the guide regions (32.1, 32.2, 32.3), starting from the binder seat region surface (38), said grooves being parabolic when viewed in the cross section and having different depths (T1) inside the lobe regions (30.1, 30.2, 30.3) and/or the guide regions (32.1, 32.2, 32.3).

2. Boot according to claim1, **characterized in that** a material (55) of the binder seat region (36) located between the at least two grooves (52, 54) has a thickness Dₐ at half the depth (T2) of the grooves (52, 54) in the lobe regions (30.1, 30.2, 30.3) and/or the guide regions (32.1, 32.2, 32.3) that corresponds to approximately 85% to approximately 115% of a thickness D_{b}, which is determined between an outer wall (42) or an inner wall (44) of the first fastening region (12) and the respective groove wall (56.1, 56.2) of the groove (52, 54) facing it, at half the depth (T2).

3. Boot according to either or both of the preceding claims, **characterized in that** there are reinforcing ribs (60.1, 60.2, 60.3, 60.4, 60.5, 60.6) located inside the grooves (52, 54) in the lobe regions (30.1, 30.2, 30.3) and/or in the guide regions (32.1, 32.2, 32.3).

4. Boot according to claim 3, **characterized in that** at least one of the reinforcement ribs (60.1, 60.2, 60.3) has a radial orientation.

5. Boot according to claim 3, **characterized in that** at least one of the reinforcement ribs (60) is at an angle to a radial orientation of the boot (10).

6. Boot according to any one or more of the preceding claims, **characterized in that** the grooves (52, 54) form annular grooves.

7. Boot according to any one or more of the preceding claims, **characterized in that** a material thickness (S1, S2) of the first fastening region (12) is substantially the same underneath the grooves (52, 54) in the lobe regions (30.1, 30.2, 30.3) and/or the guide regions (32.1, 32.2, 32.3).

8. Boot according to any one or more of the preceding claims, **characterized in that** there are at least two sealing lips (62.1, 62.2, 62.3, 62.4, 62.5) on an undersurface (40) of the first fastening region (12) facing away from the binder seat region surface (38).

9. Boot according to claim 8, **characterized in that** the sealing lips (62.1, 62.2, 62.3, 62.4, 62.5) are located substantially beneath the grooves (52, 54), at least in the lobe regions (30.1, 30.2, 30.3) and/or the guide regions (32.1, 32.2, 32.3).

10. Boot according to any one or more of the preceding claims, **characterized in that** there are two positioning ribs (64.1, 64.2) in the connecting regions (34.1, 34.2, 34.3, 34.4, 34.5, 34.6).

11. Boot according to claim 10, **characterized in that** the sealing lips (62.1, 62.2, 62.3, 62.4, 62.5) are located between the two positioning ribs (64.1, 64.2).

12. Boot according to any one or more of the claims 8 to 11, **characterized in that** the sealing lips (62.1, 62.2, 62.3, 62.4, 62.5) and the positioning ribs (64.1, 64.2) have different cross section profiles.

13. Use of a boot (10) according to any one or more of the claims 1 to 12 for sealing a joint-shaft connection.

14. Joint-shaft connection that has a boot (10) according to any one or more of the claims 1 to 12.

## Revendications

1. Soufflet (10) avec une première et une deuxième zone de fixation (12, 14) et une zone de plis (16) entre celles-ci, dans lequel la première zone de fixation (12) comprend des zones de lobes (30.1, 30.2, 30.3) et/ou des zones de guidage (32.1, 32.2, 32.3) et des zones d'accouplement (34.1, 34.2, 34.3, 34.4, 34.5, 34.6) et une zone de siège d'accouplement (36), **caractérisé en ce que** la zone de siège d'accouplement (36) comprend, à partir d'une surface de zone de siège d'accouplement (38), dans les zones de lobes (30.1, 30.2, 30.3) et/ou dans les zones de guidage (32.1, 32.2, 32.3), au moins deux rainures de forme parabolique (52, 54) vues en coupe transversale, avec différentes profondeurs (T1) à l'intérieur des zones de lobes (30.1, 30.2, 30.3) et/ou des zones de guidage (32.1, 32.2, 32.3).

2. Soufflet selon la revendication 1, **caractérisé en ce qu'**un matériau (55) de la zone de siège d'accouplement (36) disposé entre les au moins deux rainures (52, 54), présente, à mi-profondeur (T2) des rainures (52, 54) dans les zones de lobes (30.1, 30.2, 30.3) et/ou dans les zones de guidage (32.1, 32.2, 32.3), une épaisseur Dₐ qui correspond à entre environ 85% et environ 115% d'une épaisseur D_{b}, définie entre une paroi extérieure (42) ou une paroi intérieure (44) de la première zone de fixation (12) et la paroi de rainure (56.1, 56.2) orientée vers celle-ci de la rainure (52, 54), à mi-profondeur (T2).

3. Soufflet selon une ou plusieurs des revendications précédentes, **caractérisé en ce qu'**à l'intérieur des rainures (52, 54), des nervures de renfort (60.1, 60.2, 60.3, 60.4, 60.5, 60.6) sont disposées dans les zones de lobes (30.1, 30.2, 30.3) et/ou dans les zones de guidage (32.1, 32.2, 32.3).

4. Soufflet selon la revendication 3, **caractérisé en ce qu'**au moins une des nervures de renfort (60.1, 60.2, 60.3) est orientée radialement.

5. Soufflet selon la revendication 3, **caractérisé en ce qu'**au moins une des nervures de renfort (60) forme un angle avec une orientation radiale du soufflet (10).

6. Soufflet selon une ou plusieurs des revendications précédentes, **caractérisé en ce que** les rainures (52, 54) sont configurées comme des rainures annulaires.

7. Soufflet selon une ou plusieurs des revendications précédentes, **caractérisé en ce qu'**une épaisseur de matériau (S1, S2) de la première zone de fixation (12) au-dessous des rainures (52, 54) dans les zones de lobes (30.1, 30.2, 30.3) et/ou dans les zones de guidage (32.1, 32.2, 32.3) est sensiblement égale.

8. Soufflet selon une ou plusieurs des revendications précédentes, **caractérisé en ce qu'**au moins deux lèvres d'étanchéité (62.1, 62.2, 62.3, 62.4, 62.5) sont disposées sur une face inférieure (40) de la première zone de fixation (12) opposée à la surface de zone de siège d'accouplement (38).

9. Soufflet selon la revendication 8, **caractérisé en ce que** les lèvres d'étanchéité (62.1, 62.2, 62.3, 62.4, 62.5) sont disposées sensiblement sous les rainures (52, 54) au moins dans les zones de lobes (30.1, 30.2, 30.3) et/ou les zones de guidage (32.1, 32.2, 32.3).

10. Soufflet selon une ou plusieurs des revendications précédentes, **caractérisé en ce que** deux nervures de positionnement (64.1, 64.2) sont disposées dans les zones d'accouplement (34.1, 34.2, 34.3, 34.4, 34.5, 34.6).

11. Soufflet selon la revendication 10, **caractérisé en ce que** les lèvres d'étanchéité (62.1, 62.2, 62.3, 62.4, 62.5) sont disposées entre les deux nervures de positionnement (64.1, 64.2).

12. Soufflet selon une ou plusieurs des revendications 8 à 11, **caractérisé en ce qu'**un profil transversal des lèvres d'étanchéité (62.1, 62.2, 62.3, 62.4, 62.5) et un profil transversal des nervures de positionnement (64.1, 64.2) sont différents.

13. Utilisation d'un soufflet (10) selon une ou plusieurs des revendications 1 à 12 pour étanchéifier un accouplement d'arbre à cardan.

14. Accouplement d'arbre à cardan avec un soufflet (10) selon une des revendications 1 à 12.
